# EUROPÄISCHE PATENTANMELDUNG

(11) **EP 3 196 623 A1**
(43) Veröffentlichungstag der Anmeldung: **26.07.2017**
(21) Anmeldenummer: 16152531.6
(22) Anmeldetag: 25.01.2016
(51) Int. Cl.: G01M 3/26, F15B 19/00, F15B 20/00

(54) **EINFACHE LECKAGEBESTIMMUNG BEI EINER HYDRAULIKZYLINDEREINHEIT**

(71) Anmelder: Primetals Technologies Germany GmbH, 91052 Erlangen (DE)
(72) Erfinder: Gafur, Ilhom, 90766 Fürth (DE); Lorenz, Andreas, 91054 Erlangen (DE)
(74) Vertreter: Metals@Linz

(57) **Zusammenfassung**

Eine Hydraulikzylindereinheit (1) weist einen Hydraulikzylinder (2), einen in dem Hydraulikzylinder (2) verfahrbaren Kolben (3) und ein Servoventil (7) auf. Der Kolben (3) trennt Arbeitsvolumina (5A, 5B) der Hydraulikzylindereinheit (1) voneinander. Das Servoventil (7) ist mit einer Hydraulikpumpe (8), einem Tank (9) sowie denArbeitsvolumina (5A, 5B) verbunden. Das Servoventil (7) wird über die Hydraulikpumpe (8) mit einem Pumpendruck (pP) beaufschlagt. Der Tank (9) weist einen Tankdruck (pT) auf. Das Servoventil (7) wird auf eine definierte Ventilstellung (y) eingestellt. Eine Kolbenstellung (z) des Kolbens (3) im Hydraulikzylinder (2) sowie Arbeitsdrücke (pA, pB), mit denen die Arbeitsvolumina (5A, 5B) beaufschlagt sind, werden erfasst. Eine Auswertungseinrichtung (12) ermittelt anhand der Kolbenstellung (z), der Arbeitsdrücke (pA, pB), der Ventilstellung (y), des Pumpendrucks (pP) und vorzugsweise des Tankdrucks (pT) in Verbindung mit zeitlich unveränderlichen Parametern der Hydraulikzylindereinheit (1) einen Leckagebeiwert (ω) der Hydraulikzylindereinheit (1).

## Beschreibung

Die vorliegende Erfindung geht aus von einem Ermittlungsverfahren für einen Leckagebeiwert einer Hydraulikzylindereinheit, die einen Hydraulikzylinder, einen in dem Hydraulikzylinder verfahrbaren Kolben und ein Servoventil aufweist, wobei der Kolben ein erstes und ein zweites Arbeitsvolumen der Hydraulikzylindereinheit voneinander trennt, wobei das Servoventil mit einer Hydraulikpumpe, einem Tank sowie dem ersten und dem zweiten Arbeitsvolumen verbunden ist,
- wobei das Servoventil über die Hydraulikpumpe mit einem Pumpendruck beaufschlagt wird und der Tank einen Tankdruck aufweist,
- wobei das Servoventil auf eine definierte Ventilstellung eingestellt wird,
- wobei eine Kolbenstellung des Kolbens im Hydraulikzylinder sowie ein erster und ein zweiter Arbeitsdruck, mit dem das erste und das zweite Arbeitsvolumen beaufschlagt sind, erfasst werden.

Die vorliegende Erfindung geht weiterhin aus von einem Computerprogramm für eine Auswertungseinrichtung, wobei das Computerprogramm Maschinencode umfasst, der von der Auswertungseinrichtung unmittelbar abarbeitbar ist, wobei die Abarbeitung des Maschinencodes durch die Auswertungseinrichtung bewirkt, dass die Auswertungseinrichtung den Leckagebeiwert ermittelt.

Die vorliegende Erfindung geht weiterhin aus von einer Auswertungseinrichtung zum Ermitteln eines Leckagebeiwerts einer Hydraulikzylindereinheit, die einen in einem Hydraulikzylinder verfahrbaren Kolben und ein Servoventil aufweist, wobei der Kolben ein erstes und ein zweites Arbeitsvolumen der Hydraulikzylindereinheit voneinander trennt, wobei das Servoventil eingangsseitig mit einer Hydraulikpumpe und mit einem Tank und ausgangsseitig mit dem ersten und dem zweiten Arbeitsvolumen verbunden ist.

Die vorliegende Erfindung geht weiterhin aus von einer Hydraulikzylindereinheit, die einen in einem Hydraulikzylinder verfahrbaren Kolben und ein Servoventil aufweist, wobei der Kolben ein erstes und ein zweites Arbeitsvolumen der Hydraulikzylindereinheit voneinander trennt, wobei das Servoventil eingangsseitig mit einer Hydraulikpumpe und mit einem Tank und ausgangsseitig mit dem ersten und dem zweiten Arbeitsvolumen verbunden ist,
- wobei das Servoventil über die Hydraulikpumpe mit einem Pumpendruck beaufschlagt wird und der Tank einen Tankdruck aufweist,
- wobei das Servoventil von einer Steuereinrichtung auf eine definierte Ventilstellung eingestellt wird,
- wobei von entsprechenden Sensoren eine Kolbenstellung des Kolbens im Hydraulikzylinder sowie ein erster und ein zweiter Arbeitsdruck, mit dem das erste und das zweite Arbeitsvolumen beaufschlagt sind, erfasst werden.

Erfindungsgemäß kann für den Tankdruck in vielen Fällen näherungsweise 0 angenommen werden.

Aus der DE 10 2007 051 857 B3 ist eine Hydraulikzylindereinheit bekannt, die einen in einem Hydraulikzylinder verfahrbaren Kolben und ein Hydraulikventil aufweist, wobei der Kolben ein erstes und ein zweites Arbeitsvolumen der Hydraulikzylindereinheit voneinander trennt, wobei das Hydraulikventil eingangsseitig mit einer Hydraulikpumpe und mit einem Tank und ausgangsseitig mit dem ersten und dem zweiten Arbeitsvolumen verbunden ist. Das Hydraulikventil wird über die Hydraulikpumpe mit einem Pumpendruck beaufschlagt. Der Tank weist einen Tankdruck auf. Das Hydraulikventil wird auf eine definierte Ventileinstellung eingestellt. Ein erster und ein zweiter Arbeitsdruck, mit dem das erste und das zweite Arbeitsvolumen beaufschlagt sind, sowie eine Kolbenstellung des Kolbens im Hydraulikzylinder werden erfasst.

Bei der DE 10 2007 051 857 B3 wird anhand erfasster, zeitlich variabler Größen wie beispielsweise dem ersten und dem zweiten Arbeitsdruck und der Kolbenstellung in Verbindung mit weiteren, zeitlichen invarianten Größen wie beispielsweise den wirksamen Arbeitsflächen des Kolbens ein Linearisierungsfaktor ermittelt, der einen gleichmäßigen Betrieb der Hydraulikzylindereinheit über den gesamten Stellweg des Kolbens gewährleistet.

Bei der DE 10 2007 051 857 B3 ist das Hydraulikventil als Zweiwegeventil oder als Vierwegeventil ausgebildet. Weitere Aussagen über die Ausgestaltung des Hydraulikventils finden sich nicht.

Bei einer Hydraulikzylindereinheit ist es erforderlich, die beiden Arbeitsvolumina gegeneinander abzudichten. In der Regel ist zu diesem Zweck in den Kolben eine entsprechende Dichtung eingebracht, insbesondere eine Ringdichtung. Dennoch tritt in der Praxis ein geringer Fluss an Hydraulikflüssigkeit vom Arbeitsvolumen mit dem jeweils höheren Arbeitsdruck zum Arbeitsvolumen mit dem jeweils niedrigeren Arbeitsdruck auf. Dieser Fluss bzw. Leckstrom ist proportional zur Differenz der beiden Arbeitsdrücke. Der zugehörige Proportionalitätsfaktor ist der sogenannte Leckagebeiwert.

Die in den Kolben eingebrachte Dichtung unterliegt Verschleißerscheinungen. Die Verschleißerscheinungen verringern zunächst nur die Dynamik der Hydraulikzylindereinheit. Es kann jedoch bei fortschreitendem Verschleiß auch zu einem Bruch der Dichtung und damit zu einem abrupten Versagen der Hydraulikzylindereinheit kommen.

Um einem derartigen Versagen der Hydraulikzylindereinheit vorzubeugen, ist im Stand der Technik bekannt, die Hydraulikzylindereinheit von Zeit zu Zeit zu demontieren und die Dichtung zu erneuern bzw. zumindest zu kontrollieren. Diese Vorgehensweise ist zum einen mit einer Betriebsunterbrechung der Hydraulikzylindereinheit verbunden und zum anderen äußerst aufwändig.

Im Stand der Technik ist weiterhin bekannt, die Hydraulikzylindereinheit mit speziellen zusätzlichen Messeinrichtungen zu versehen, insbesondere mit Durchflussmessern in den Hydraulikzuleitungen zu den Arbeitsvolumina der Hydraulikzylindereinheit. Ein Nachrüsten ist umständlich und teuer. Auch bei Neuanschaffungen stellen die zusätzlichen Messeinrichtungen einen erheblichen Kostenfaktor dar. Diese theoretisch mögliche Lösung wird daher in der Praxis meist nicht ergriffen.

Die Aufgabe der vorliegenden Erfindung besteht darin, Möglichkeiten zu schaffen, mittels derer im laufenden Betrieb der Hydraulikzylindereinheit eine Überwachung der internen Leckage der Hydraulikzylindereinheit möglich wird, ohne zur Ermittlung der Leckage bzw. des Leckagebeiwerts - also der eigentlich signifikanten Größe - derartige spezielle Messeinrichtungen zu benötigen.

Die Aufgabe wird durch ein Ermittlungsverfahren mit den Merkmalen des Anspruchs 1 gelöst. Eine konkrete Ausgestaltung des Ermittlungsverfahrens ist Gegenstand des abhängigen Anspruchs 2.

Erfindungsgemäß wird ein Ermittlungsverfahren der eingangs genannten Art dadurch ausgestaltet,
- dass eine Auswertungseinrichtung die Kolbenstellung, den ersten und den zweiten Arbeitsdruck und die Ventilstellung entgegennimmt und
- dass die Auswertungseinrichtung den Leckagebeiwert anhand der Kolbenstellung, des ersten und des zweiten Arbeitsdrucks, der Ventilstellung, des Pumpendrucks und vorzugsweise des Tankdrucks, in Verbindung mit zeitlich unveränderlichen Parametern der Hydraulikzylindereinheit ermittelt.

Durch diese Vorgehensweise kann der Leckagebeiwert auf einfache und kostengünstige Weise zuverlässig ermittelt werden. Insbesondere werden in der Regel die Kolbenstellung und der erste und der zweite Arbeitsdruck für den normalen Betrieb der Hydraulikzylindereinheit sowieso benötigt. Die Ventilstellung ist oftmals ebenfalls bekannt. Falls für die Erfassung der Ventilstellung ein zusätzlicher Sensor erforderlich ist, ist dieser kostengünstig und einfach realisierbar.

Die Ermittlung des Leckagebeiwerts ist besonders zuverlässig dadurch möglich, dass die Auswertungseinrichtung den Leckagebeiwert rekursiv anhand einer Sequenz ermittelt, wobei die Sequenz Gruppen von zeitlich zusammengehörigen Werten der Kolbenstellung, der Ventilstellung, des ersten und des zweiten Arbeitsdrucks, des Pumpendrucks, und vorzugsweise des Tankdrucks, umfasst. Der Begriff "zeitlich zusammengehörig" bedeutet, dass die jeweiligen Werte für den selben Zeitpunkt des Betriebs der Hydraulikzylindereinheit gültig sind. Rekursive Ermittlung bedeutet, dass zunächst ein Gleichungssystem mit im wesentlichen sinnvollen Werten für den Leckagebeiwert und interne Werte des Gleichungssystems initialisiert wird, sodann durch Einsetzen der Werte der ersten Gruppe neue Werte für den Leckagebeiwert und die internen Werte des Gleichungssystems ermittelt werden und diese Vorgehensweise sodann, jeweils ausgehend von den zuvor ermittelten Werten, mit den Werten der jeweils nächsten Gruppe fortgesetzt wird.

Die Aufgabe wird weiterhin durch ein Computerprogramm mit den Merkmalen des Anspruchs 4 gelöst. Eine konkrete Ausgestaltung des Computerprogramms ist Gegenstand des abhängigen Anspruchs 5.

Erfindungsgemäß wird ein Computerprogramm der eingangs genannten Art dadurch ausgestaltet, dass die Abarbeitung des Maschinencodes durch die Auswertungseinrichtung bewirkt, dass die Auswertungseinrichtung
- eine Kolbenstellung eines in einem Hydraulikzylinder einer Hydraulikzylindereinheit verfahrbaren, ein mit einem Servoventil der Hydraulikzylindereinheit verbundenes erstes und ein mit dem Servoventil verbundenes zweites Arbeitsvolumen der Hydraulikzylindereinheit voneinander trennenden Kolbens der Hydraulikzylindereinheit, einen ersten und einen zweiten Arbeitsdruck, mit dem das erste und das zweite Arbeitsvolumen beaufschlagt sind, und eine Ventilstellung des Servoventils entgegennimmt und
- anhand der Kolbenstellung, des ersten und des zweiten Arbeitsdrucks, der Ventilstellung, eines Pumpendrucks einer mit dem Servoventil verbundenen Hydraulikpumpe und vorzugsweise eines Tankdrucks eines mit dem Servoventil verbundenen Tanks in Verbindung mit zeitlich unveränderlichen Parametern der Hydraulikzylindereinheit einen Leckagebeiwert der Hydraulikzylindereinheit ermittelt.

Analog zum Ermittlungsverfahren besteht die konkrete Ausgestaltung des Computerprogramms darin, dass die Abarbeitung des Maschinencodes durch die Auswertungseinrichtung bewirkt, dass die Auswertungseinrichtung den Leckagebeiwert rekursiv anhand einer Sequenz ermittelt, wobei die Sequenz Gruppen von zeitlich zusammengehörigen Werten der Kolbenstellung, des ersten und des zweiten Arbeitsdrucks, der Ventilstellung, des Pumpendrucks und vorzugsweise des Tankdrucks umfasst.

Die Aufgabe wird weiterhin durch eine Auswertungseinrichtung mit den Merkmalen des Anspruchs 6 gelöst. Erfindungsgemäß ist eine Auswertungseinrichtung der eingangs genannten Art mit einem erfindungsgemäßen Computerprogramm programmiert.

Die Aufgabe wird weiterhin durch eine Hydraulikzylindereinheit mit den Merkmalen des Anspruchs 7 gelöst. Eine konkrete Ausgestaltung der Hydraulikzylindereinheit ist Gegenstand des abhängigen Anspruchs 8.

Erfindungsgemäß wird eine Hydraulikzylindereinheit der eingangs genannten Art dadurch ausgestaltet,
- dass eine Auswertungseinrichtung von den Sensoren die Kolbenstellung und den ersten und den zweiten Arbeitsdruck sowie von der Steuereinrichtung oder von einem weiteren Sensor die Ventilstellung entgegennimmt und
- dass die Auswertungseinrichtung den Leckagebeiwert anhand der Kolbenstellung, des ersten und des zweiten Arbeitsdrucks, der Ventilstellung, des Pumpendrucks und vorzugsweise des Tankdrucks in Verbindung mit im Betrieb der Hydraulikzylindereinheit zeitlich unveränderlichen Parametern der Hydraulikzylindereinheit ermittelt.

Analog zum Ermittlungsverfahren besteht die konkrete Ausgestaltung der Hydraulikzylindereinheit darin, dass die Auswertungseinrichtung derart ausgebildet ist, dass sie den Leckagebeiwert rekursiv anhand einer Sequenz ermittelt, wobei die Sequenz Gruppen von zeitlich zusammengehörigen Werten der Kolbenstellung, der Ventilstellung, des ersten und des zweiten Arbeitsdrucks, des Pumpendrucks und vorzugsweise des Tankdrucks umfasst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigt in schematischer Darstellung:

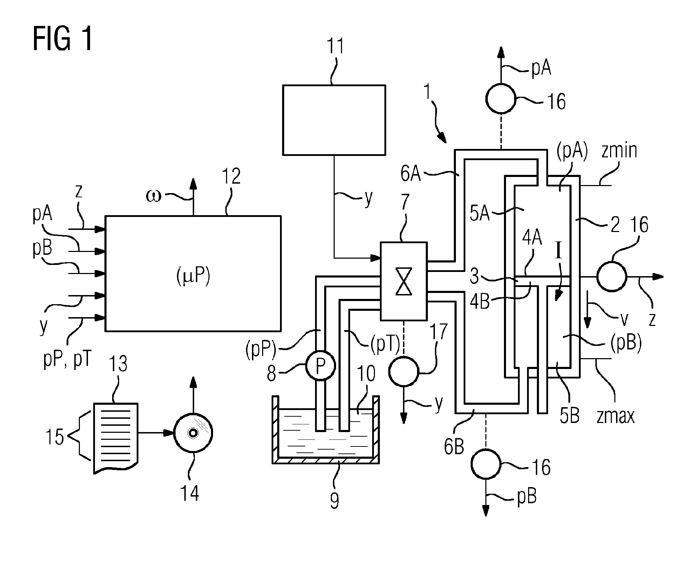

- FIG 1: ein Blockschaltbild einer Hydraulikzylindereinheit einschließlich zugehöriger Komponenten.

Gemäß FIG 1 weist eine Hydraulikzylindereinheit 1 einen Hydraulikzylinder 2 auf, in dem ein Kolben 3 beweglich gelagert ist. Der Kolben 3 ist innerhalb des Hydraulikzylinders 1 zwischen einer Minimalstellung zmin und einer Maximalstellung zmax bewegbar. Er befindet sich also zu jedem Zeitpunkt bei einer Iststellung z, die zwischen der Minimalstellung zmin und der Maximalstellung zmax liegt.

Der Kolben 3 weist eine erste Arbeitsfläche 4A und eine zweite Arbeitsfläche 4B auf. Jede Arbeitsfläche 4A, 4B ist einem entsprechenden Arbeitsvolumen 5A, 5B zugewandt. Im Arbeitsvolumen 5A herrscht ein erster Arbeitsdruck pA, im zweiten Arbeitsvolumen 5B ein zweiter Arbeitsdruck pB.

Die Arbeitsvolumina 5A, 5B sind über Hydraulikpfade 6A, 6B und ein Servoventil 7 mit einer Hydraulikpumpe 8 und einem Hydraulikreservoir 9 bzw. Tank 9 hydraulisch verbunden. Die Hydraulikpfade 6A, 6B erstrecken sich von dem jeweiligen Arbeitsvolumen 5A, 5B bis zum Servoventil 7.

Über die Hydraulikpumpe 8 wird die Hydraulikflüssigkeit 10 mit einem Pumpendruck pP beaufschlagt. Im Hydraulikreservoir 9 herrscht ein Tankdruck pT. Gemäß einer Näherung kann der Tankdruck mit 0 angenommen werden. Im Ergebnis stehen somit am Servoventil 7 über den jeweiligen Anschluss zur Hydraulikpumpe 8, zum Tank 9 und zu den Arbeitsvolumina 5A, 5B der Pumpendruck pP, der Tankdruck pT und die beiden Arbeitsdrücke pA, pB an.

Die Funktionalität des Servoventils 7 besteht - im Gegensatz zu einem Proportionalventil oder einem Schaltventil - darin, dass bei gegebenen Drücken pP, pT, pA und pB durch eine Ventilstellung y des Servoventils 7 nicht nur qualitativ, sondern auch quantitativ bestimmt ist, welche Volumenströme über die Hydraulikpumpe 8 zu welchem der Arbeitsvolumina 5A, 5B bzw. von welchem der Arbeitsvolumina 5A, 5B in den Tank 9 fließen. Das Servoventil 7 kann nach Bedarf als Vierwegeventil oder als Zweiwegeventil ausgebildet sein. Mittels eines Vierwegeventils ist jedes der beiden Arbeitsvolumina 5A, 5B alternativ mit dem Pumpendruck pP oder mit dem Tankdruck pT beaufschlagbar. Bei einem Zweiwegeventil wird eines der beiden Arbeitsvolumina 5A, 5B mit einem konstanten Druck beaufschlagt, beispielsweise mit der Hälfte des Pumpendrucks pP. Das andere der Arbeitsvolumina 5A, 5B wird in diesem Fall alternativ mit dem Pumpendruck pP oder dem Tankdruck pT beaufschlagt.

Der Kolben 3 trennt die beiden Arbeitsvolumina 5A, 5B voneinander. Dennoch fließt ein Leckstrom I an Hydraulikflüssigkeit 10 zwischen den beiden Arbeitsvolumina 5A, 5B. Der Leckstrom I ist proportional zur Differenz der Arbeitsdrücke pA, pB. Es gilt also die Beziehung $I = ω ⋅ \left(pA-pB\right)$

Der Proportionalitätsfaktor ω wird üblicherweise als Leckagebeiwert bezeichnet. Die Ermittlung des Leckagebeiwerts ω ist Gegenstand der vorliegenden Erfindung. Hierauf wird später detailliert eingegangen.

Die Hydraulikzylindereinheit 1 wird von einer Steuereinrichtung 11 gesteuert. Insbesondere wird das Servoventil 7 von der Steuereinrichtung 11 zu jedem Zeitpunkt definiert auf die für den jeweiligen Zeitpunkt vorgegebene jeweilige Ventilstellung y eingestellt.

Weiterhin ist eine Auswertungseinrichtung 12 vorhanden. Die Auswertungseinrichtung 12 ist entsprechend der Darstellung in FIG 1 als softwareprogrammierbare Einrichtung ausgebildet. In FIG 1 ist die Auswertungseinrichtung 12 als von der Steuereinrichtung 11 verschiedene Einrichtung dargestellt. Die Auswertungseinrichtung 12 kann jedoch alternativ mit der Steuereinrichtung 11 eine Einheit bilden.

Die Auswertungseinrichtung 12 ist mittels eines Computerprogramms 13 programmiert. Das Computerprogramm 13 kann der Auswertungseinrichtung 12 beispielsweise mittels eines Datenträgers 14 zugeführt werden, auf dem das Computerprogramm 13 in maschinenlesbarer Form gespeichert ist. Als Datenträger 14 kommt hierbei prinzipiell ein beliebiger Datenträger in Frage. Dargestellt ist (rein beispielhaft) in FIG 1 eine CD-ROM 14.

Das Computerprogramm 13 umfasst Maschinencode 15, der von der Auswertungseinrichtung 12 unmittelbar abarbeitbar ist. Das Abarbeiten des Maschinencodes 15 durch die Auswertungseinrichtung 12 bewirkt, dass die Auswertungseinrichtung 12 ein Ermittlungsverfahren für den Leckagebeiwert ω ausführt, das nachfolgend näher erläutert wird.

Im Rahmen der vorliegenden Erfindung werden mittels entsprechender Sensoren 16 die Kolbenstellung z des Kolbens 3 im Hydraulikzylinder 2 sowie der erste und der zweite Arbeitsdruck pA, pB erfasst. Die erfassten Größen z, pA, pB werden der Auswertungseinrichtung 12 zugeführt. Diese nimmt die erfassten Größen z, pA, pB entgegen. Die Größen z, pA, pB sind zeitvariabel. Sie werden also mit jedem Zeittakt TS neu erfasst. Die zu einem bestimmten Zeitpunkt erfassten Größen z, pA, pB sind Bestandteil einer jeweiligen Gruppe von zeitlich zusammengehörigen Werten.

Bestandteil der jeweiligen Gruppe von zeitlich zusammengehörigen Werten sind auch der Pumpendruck pP und vorzugsweise der Tankdruck pT. Es ist möglich, dass auch diese Größen pP, pT mittels Sensoren erfasst werden. In diesem Fall können die Größen pP, pT zeitvariabel sein, da sie mit jedem Zeittakt TS neu erfasst und der Auswertungseinrichtung 12 zugeführt werden. Alternativ können der Pumpendruck pP und der Tankdruck pT jedoch ebenso konstant sein. In diesem Fall müssen der Pumpendruck pP und der Tankdruck pT der Auswertungseinrichtung 12 nur einmal bekannt gemacht werden, beispielsweise im Wege einer Parametrierung der Auswertungseinrichtung 12. Oftmals kann für den Tankdruck 0 angenommen werden.

Bestandteil der jeweiligen Gruppe von zeitlich zusammengehörigen Werten ist weiterhin die jeweilige Ventilstellung y. Die Ventilstellung y ist eine zeitvariable Größe, die der Auswertungseinrichtung 12 mit jedem Zeittakt TS neu zugeführt werden muss. Es ist möglich, dass die Ventilstellung y der Auswertungseinrichtung 12 von der Steuereinrichtung 11 übermittelt wird. Alternativ ist es möglich, dass die Ventilstellung y mittels eines weiteren Sensors 17 erfasst und von dort aus der Auswertungseinrichtung 12 zugeführt wird. Welche dieser beiden Vorgehensweisen ergriffen wird, liegt im Belieben des Fachmanns.

Die Auswertungseinrichtung 12 ermittelt den Leckagebeiwert ω anhand der genannten Werte, also anhand der Kolbenstellung z, des ersten und des zweiten Arbeitsdrucks pA, pB, der Ventilstellung y, des Pumpendrucks pP und vorzugsweise des Tankdrucks pT. Sie verwendet zur Ermittlung zusätzlich zu den vorstehend genannten Größen eine Anzahl von weiteren Parametern der Hydraulikzylindereinheit 1. Diese weiteren Parameter sind jedoch zeitlich unveränderlich. Sie müssen der Auswertungseinrichtung 12 daher nur einmal im Rahmen einer Parametrierung bekannt gemacht werden.

In der Regel erfolgt durch die Auswertungseinrichtung 12 eine rekursive Ermittlung des Leckagebeiwerts ω. Die Auswertungseinrichtung 12 ermittelt also, ausgehend von einer zuvor gültigen, mittels eines Gleichungssystems ermittelten Lösung des Gleichungssystems durch Einsetzen der zeitlich zusammengehörigen Werte einer Gruppe von Werten jeweils eine neue Lösung des Gleichungssystems. Ein Teil der jeweiligen Lösung ist der Leckagebeiwert ω. Der verbleibende Teil der Lösung sind interne Werte des Gleichungssystems. Die Gruppen von Werten wurden obenstehend erläutert. Jede Gruppe umfasst - gültig für den jeweiligen Zeitpunkt - die Kolbenstellung z, den ersten und den zweiten Arbeitsdrucks pA, pB, die Ventilstellung y, den Pumpendruck pP und vorzugsweise den Tankdruck pT. Das Gleichungssystem ist derart bestimmt, dass die Lösung des Gleichungssystems und insbesondere der Leckagebeiwert ω konvergiert.

Die genaue Vorgehensweise wird nachstehend detailliert erläutert.

Der zeitliche Verlauf der Arbeitsdrücke pA, pB kann mit hinreichender Genauigkeit durch folgende Differenzialgleichungen beschrieben werden: $\dot{pA} = \frac{E}{VA \left(z\right)} ⋅ sign \left(pP-pA\right) \left(QNAy\sqrt{\frac{pP - pA}{pN}}-AA\dot{z}+ω\left(pA-pB\right)\right)$ $\dot{pB} = - \frac{E}{VB \left(z\right)} ⋅ sign \left(pB-pT\right) \left(QNBy\sqrt{\frac{pB - pT}{pN}}-AB\dot{z}-ω\left(pA-pB\right)\right)$ $\dot{pA} = \frac{E}{VA \left(z\right)} ⋅ sign \left(pA-pT\right) \left(QNAy\sqrt{\frac{pA - pT}{pN}}-AA\dot{z}+ω\left(pA-pB\right)\right)$ $\dot{pB} = - \frac{E}{VB \left(z\right)} ⋅ sign \left(pV-pB\right) \left(QNBy\sqrt{\frac{pV - pB}{pN}}-AB\dot{z}+ω\left(pA-pB\right)\right)$

Wird für den Tankdruck näherungsweise 0 angenommen, vereinfachen sich die Gleichungen zu: $\dot{pA} = \frac{E}{VA \left(z\right)} ⋅ sign \left(pP-pA\right) \left(QNAy\sqrt{\frac{pP - pA}{pN}}-AA\dot{z}+ω\left(pA-pB\right)\right)$ $\dot{pB} = - \frac{E}{VB \left(z\right)} ⋅ sign \left(pB\right) \left(QNBy\sqrt{\frac{pB}{pN}}-AB\dot{z}-ω\left(pA-pB\right)\right)$ $\dot{pA} = \frac{E}{VA \left(z\right)} ⋅ sign \left(pA\right) \left(QNAy\sqrt{\frac{pA}{pN}}-AA\dot{z}+ω\left(pA-pB\right)\right)$ $\dot{pB} = - \frac{E}{VB \left(z\right)} ⋅ sign \left(pV-pB\right) \left(QNBy\sqrt{\frac{pV - pB}{pN}}-AB\dot{z}+ω\left(pA-pB\right)\right)$

Die Gleichungen 2 und 3 gelten, wenn die Ventilstellung y größer als 0 ist, d.h. das erste Arbeitsvolumen 5A über das Servoventil 7 mit der Pumpe 8 verbunden ist und das zweite Arbeitsvolumen 5B über das Servoventil 7 mit dem Tank 9 verbunden ist. Die Gleichungen 4 und 5 gelten, wenn die Ventilstellung y kleiner als 0 ist, d.h. das erste Arbeitsvolumen 5A über das Servoventil 7 mit dem Tank 9 verbunden ist und das zweite Arbeitsvolumen 5B über das Servoventil 7 mit der Pumpe 8 verbunden ist. Der Fall, dass die Ventilstellung y exakt gleich Null ist, kann (nach Belieben) ausgeklammert werden oder dem Fall, dass die Ventilstellung y größer als 0 ist, oder dem Fall, dass die Ventilstellung y kleiner als 0 ist, zugeordnet werden.

Für die in den Gleichungen 2 bis 5 verwendeten Parameter gilt:
- E ist die Federkonstante der Hydraulikflüssigkeit 10.
- VA ist das Volumen an Hydraulikflüssigkeit 10, das sich im Hydraulikpfad 6A und im ersten Arbeitsvolumen 5A befindet. Das Volumen VA ergibt sich zu $VA = V min A + AA \left(z-zmin\right)$ wobei VminA diejenige Menge an Hydraulikflüssigkeit 10 ist, die sich zwischen dem Servoventil 7 und der Arbeitsfläche 4A des Kolbens 3 befindet, wenn der Kolben 3 sich in seiner Minimalstellung zmin befindet. AA ist die Größe der wirksamen Arbeitsfläche 4A des Kolbens 3.
- VB ist in analoger Weise das Volumen an Hydraulikflüssigkeit 10, das sich im Hydraulikpfad 6B und im zweiten Arbeitsvolumen 5B befindet. Das Volumen VB ergibt sich zu $VB = V min B + AB \left(z max - z\right)$ wobei VminB diejenige Menge an Hydraulikflüssigkeit 10 ist, die sich zwischen dem Servoventil 7 und der Arbeitsfläche 4B des Kolbens 3 befindet, wenn der Kolben 3 sich in seiner Maximalstellung zmax befindet. AB ist die Größe der wirksamen Arbeitsfläche 4B des Kolbens 3.
- pN ist ein Nominaldruck.
- QNA ist ein Nennvolumenstrom, der bei maximaler Ventilstellung y in das erste Arbeitsvolumen 5A strömt, wenn eine Differenz zwischen dem Pumpendruck pP und dem im ersten Arbeitsvolumen 5A anstehenden ersten Arbeitsdruck pA gleich dem Nominaldruck pN ist.
- QNB ist ein Nennvolumenstrom, der bei maximaler Ventilstellung y in das zweite Arbeitsvolumen 5B strömt, wenn eine Differenz zwischen dem Pumpendruck pP und dem im zweiten Arbeitsvolumen 5B anstehenden zweiten Arbeitsdruck pB gleich dem Nominaldruck pN ist.

Der Leckagebeiwert ω geht in die Gleichungen 2 bis 5 linear ein. Es sind daher - an sich bekannte - lineare Parameterschätzalgorithmen anwendbar, mittels derer der Leckagebeiwert ω ermittelt werden kann.

Die Ermittlung des Leckagebeiwerts ω wird nachfolgend, ausgehend von den Gleichungen 2 und 3 erläutert. Sie wird also für den Fall erläutert, dass die Ventilstellung y größer als 0 ist. Es könnte jedoch in analoger Weise auch von den Gleichungen 4 und 5 ausgegangen werden.

Für die Anwendbarkeit der Parameterschätzalgorithmen ist es erforderlich, die Gleichungen 2 und 3 auf die Struktur $x = θH \left(t\right)$ zu bringen. In Gleichung 8 ist
- x ein messbarer Streckenausgangswert,
- θ ein Zeilenvektor der unbekannten Parameter und
- H (t) der sogenannte Regressorvektor des zeitvarianten Modells.

Konkret im vorliegenden Fall gilt θ = ω. Insbesondere ist θ somit ein Skalar. Weiterhin ergibt sich x als Vektor mit zwei Komponenten x1, x2, wobei für die Komponenten x1, x2 gilt: $x 1 = \dot{pA} - \frac{E}{VA \left(z\right)} ⋅ sign \left(pV-pA\right) \left(QNAy\sqrt{\frac{pV - pA}{pN}}-AA\dot{z}\right)$ $x 2 = \dot{pB} = \frac{E}{VB \left(z\right)} ⋅ sign \left(pB-pT\right) \left(QNBy\sqrt{\frac{pB - pT}{pN}}-AB\dot{z}\right)$

In analoger Weise ergibt sich H (t) als Vektor mit zwei Komponenten H1, H2, wobei für die Komponenten H1, H2 gilt: $H 1 \left(t\right) = \frac{E}{VA \left(z\right)} ⋅ sign \left(pV-pA\right) ⋅ \left(pA-pB\right)$ $H 2 \left(t\right) = \frac{E}{VB \left(z\right)} ⋅ sign \left(pB-pT\right) ⋅ \left(pA-pB\right)$

Im Fall von pT=0, vereinfachen sich die Gleichungen.

Im Ergebnis stehen somit zwei linear unabhängige Messwerte x1, x2 für das Parameterschätzproblem zur Verfügung. Die beiden Messwerte x1, x2 können genutzt werden, um die Schätzung des Parameters θ = ω vorzunehmen.

Das Parameterschätzproblem wird als Zustandsbeobachtungsproblem formuliert, in dem als zu beobachtendes System gesetzt wird: $\dot{ϑ} = 0$ $x : = \left[\begin{matrix}x 1 \\ x 2\end{matrix}\right] = \left[\begin{matrix}H 1 \left(t\right) \\ H 2 \left(t\right)\end{matrix}\right] ⋅ θ = : H \left(t\right) ⋅ θ$

Diese Annahmeϑ̇ =0 kann getroffen werden, weil der Leckagebeiwert ω sich - bezogen auf eine Sequenz von Messungen der obenstehend erläuterten Werte, nur langsam ändert und ferner die Beziehung θ = ω gilt.

In Gleichung 14 ist ein Teil der einzusetzenden Größen konstant. Dies trifft beispielsweise zu auf den Nenndruck pN und die Federkonstante E der Hydraulikflüssigkeit 10. Ein weiterer Teil der Größen ist zeitlich variabel bzw. kann zeitlich variabel sein. Dies trifft insbesondere auf die Kolbenstellung z, den ersten und den zweiten Arbeitsdruck pA, pB und die Ventilstellung y zu. Die Größen z, pA, pB, y sind ohne weiteres messtechnisch erfassbar, beispielsweise mittels entsprechender Sensoren 16. Bezüglich der Ventilstellung y ist es sogar möglich, dass diese nicht messtechnisch erfasst werden muss, sondern von der Steuereinrichtung 11 zur Verfügung gestellt wird. Der Pumpendruck pP und der Tankdruck pT sind entweder zeitlich variabel oder zeitlich konstant. Im einen Fall können der Pumpendruck pP und der Tankdruck pT ohne weiteres mittels entsprechender Sensoren erfasst werden. Im anderen Fall müssen sie sowieso nur parametriert werden. All diese Größen können daher ohne weiteres ermittelt und in Gleichung 14 eingesetzt werden.

Die Terme x1, x2 von Gleichung 14 enthalten jedoch auch die zeitliche Ableitung der Arbeitsdrücke pA, pB und der Kolbenstellung z. Die Ermittlung der zeitlichen Ableitung der Kolbenstellung z ist problemlos möglich. Die Werte für die Arbeitsdrücke pA, pB schwanken jedoch zu stark. Aus ihnen kann daher nicht direkt - mit sinnvollem Ergebnis - die zeitliche Ableitung ermittelt werden. Das Gleichungssystem gemäß Gleichung 14 kann dennoch gelöst werden. Dies wird nachstehend dargelegt.

Das Gleichungssystem gemäß Gleichung 14 wird einer Filterung unterzogen. Die Filterfunktion G der Filterung ist derart gewählt, dass sie einen Relativengrad von mindestens 1 aufweist. Wenn mit g1 und g2 Polynomfunktionen des (komplexen) Frequenzparameters s bezeichnet werden und weiterhin die Filterfunktion G sich zu $G = \frac{g 1 \left(s\right)}{g 2 \left(s\right)}$ ergibt, hat das Polynom g1(s) also mindestens eine Nullstelle weniger als das Polynom g2(s).

Die sich durch die Filterung ergebenden Größen werden von den ungefilterten Größen x, x1, x2, H, H1, H2 nachstehend dadurch unterschieden, dass zu den gefilterten Größen jeweils der Zusatz F hinzugefügt wird. Die gefilterten Größen werden nachfolgend also als xF, x1F, x2F, HF, H1F und H2F bezeichnet. Weiterhin wird mit L die Laplace-Transformation bezeichnet.

Für die gefilterten Größe x1F gilt somit: $L \left(x1F\right) : = G \left(s\right) ⋅ L \left(\dot{pA}-\frac{E}{VA \left(z\right)}⋅sign\left(pP-pA\right)⋅\left(QNAy\sqrt{\frac{pP - pA}{pN}}-AA\dot{z}\right)\right)$

Durch Ausnutzung der Linearität der Laplace-Transformation erhält man $L \left(x1F\right) = G \left(s\right) ⋅ L \left(\dot{pA}\right) - G \left(s\right) ⋅ L \left(\frac{E}{VA \left(z\right)}⋅sign\left(pP-pA\right)⋅\left(QNAy\sqrt{\frac{pP - pA}{pN}}-AA\dot{z}\right)\right)$

Aufgrund des Umstands, dass die Filterfunktion G(s) einen Relativengrad von mindestens 1 hat, gilt weiterhin die Beziehung $G \left(s\right) L \left(\dot{pA}\right) = G \left(s\right) ⋅ s ⋅ L \left(pA\right)$

Durch Laplace-Rücktransformation erhält man somit $x 1 F = {L}^{- 1} \left(G\left(s\right)⋅s⋅L\left(pA\right)\right) - \frac{E}{VA \left(z\right)} ⋅ sign \left(pP-pA\right) ⋅ \left(QNA⋅y⋅\sqrt{\frac{pP - pA}{pN} - AA ⋅ \dot{z}}\right)$

Im Ergebnis ist es daher möglich, die gefilterte Größe x1F zu ermitteln, ohne eine zeitliche Ableitung des ersten Arbeitsdrucks pA zu benötigen. Lediglich der erste Arbeitsdruck pA selbst wird benötigt.

Eine analoge Aussage gilt selbstverständlich für x2F. Auch hier wird für die Ermittlung der gefilterten Größe x2F nicht die zeitliche Ableitung des zweiten Arbeitsdrucks pB benötigt, sondern nur der zweite Arbeitsdruck pB selbst.

Selbstverständlich wird analog zur linken Seite von Gleichung 14 auch die rechte Seite von Gleichung 14 gefiltert. Man erhält somit das zu den Gleichungen 13 und 14 äquivalente Gleichungssystem $\dot{θ} = 0$ $xF = HF \left(t\right) ⋅ θ$

In diesem Gleichungssystem sind insbesondere die Vektoren xF und HF bzw. deren Komponenten x1F, x2F, H1F, H2F zwar Größen, die nur mit erheblichem Rechenaufwand zu ermitteln sind, sie sind jedoch ermittelbar, und zwar mit guter Genauigkeit. Dies steht im Gegensatz zu dem ursprünglichen Gleichungssystem der Gleichungen 13 und 14, bei dem die Größen H1 und H2 sehr einfach ermittelbar sind, die Größen x1 und x2 hingegen nicht ermittelbar sind bzw. nicht mit hinreichender Genauigkeit ermittelbar sind.

Die Aufgabe besteht nunmehr somit darin, unter Verwendung der Sequenz von "Messungen" xF eine asymptotische Rekonstruktion des gesuchten Zustandes θ (wobei θ = ω gilt) vorzunehmen.

Das durch die Gleichungen 20 und 21 definierte System ist ein linear zeitvariantes System (englisch: LTV = linear timevariant system). Daher reicht zur Rekonstruktion des Zustandes θ ein Lüneberg-Beobachter nicht aus. Zur Rekonstruktion des Zustands θ wird stattdessen ein Kalman-Filter verwendet.

Der Kalman-Filter ist ein zeitdiskretes System. Die Gleichungen 20 und 21 werden daher diskretisiert. Man erhält dadurch Gleichungen 22 und 23: ${ϑ}_{k + 1} = {ϑ}_{k}$ $x {F}_{k} = \left(\begin{matrix}H 1 F \left(TS⋅k\right) \\ H 2 F \left(TS⋅k\right)\end{matrix}\right) ⋅ {ϑ}_{k} = : {HF}_{k} ⋅ {ϑ}_{k}$

TS ist der Zeittakt bzw. die Zeitkonstante, mit der die "Messungen" x aufeinander folgen. k ist ein Index, der für den jeweiligen Abtastzeitpunkt steht.

Die Struktur und die Gleichungen des Kalman-Filters sind wie folgt: ${K}_{k} = {P}_{k - 1} {{HF}^{T}}_{k} {\left({HF}_{k}{P}_{k - 1}{HF}_{k}^{T}+R\right)}^{- 1}$ ${θ}_{k} = {θ}_{k - 1} + {K}_{k} \left({x}_{k}-{HF}_{k}{θ}_{k - 1}\right) = {θ}_{k - 1} + {K}_{k} {e}_{k}$ ${P}_{k} = {\left(1-{K}_{k}{HF}_{k}\right)}^{2} {P}_{k - 1} + {K}_{k} {RK}_{k}^{T}$

In den Gleichungen 24 bis 26 kommen die bisher noch nicht definierten Größen K, P, HF^{T} und R vor. Diese haben folgende Bedeutung:
- K ist die Kalman-Verstärkung. Die Kalman-Verstärkung ist vorliegend ein Vektor mit zwei Komponenten.
- P ist ein skalarer Kovarianzfaktor.
- HF^{T} ist die Transponierte des gefilterten Regressorvektors HF.
- R ist die Varianz des Messrauschens. Die Varianz R ist auf die gefilterte "Messung" xF bezogen.
- e ist, wie sich aus Gleichung 25 ergibt, die Abweichung der k-ten gefilterten "Messung" xFₖ von der (k-1)-ten Schätzung HFₖ₋₁θ.

Wenn der Kovarianzfaktor Pₖ₋₁ den Wert 0 aufweist, wird aufgrund von Gleichung 24 die Kalman-Verstärkung Kₖ ebenfalls zu 0. Dadurch wird in Gleichung 25 die k-te Schätzung des Parameter ϑ, also der Wert θₖ, nicht mehr geändert. Da mittels der erfindungsgemäßen Vorgehensweise jedoch eine langfristige Überwachung im Rahmen einer Fehlererkennung angestrebt wird, muss die Filterung adaptiv bleiben. Es muss somit gewährleistet werden, dass der Kovarianzfaktor Pₖ₋₁ stets einen Wert oberhalb von 0 aufweist. Andererseits soll der Kovarianzfaktor Pₖ₋₁ nicht beliebig große Werte annehmen können, damit eine numerische Stabilität gewährleistet bleibt. Dies wird dadurch erreicht, dass Gleichung 26 durch folgende Gleichung 27 ersetzt wird: ${P}_{k} = λ {\left(1-{K}_{k}{HF}_{k}\right)}^{2} {P}_{k - 1} + {K}_{k} {RK}_{k}^{T}$ K^{T} ist die Transponierte der Kalman-Verstärkung. λ ist eine Lernrate. Für die Lernrate λ gilt beispielsweise $λ = λ 0 \left(1-\frac{‖ {P}_{k - 1} ‖}{k 0}\right)$ λ0 hat die Bedeutung einer maximalen Lernrate, k0 die Bedeutung einer maximalen Kovarianz.

Das aus den Gleichungen 24, 25, 27 und 28 bestehende System stellt eine voll funktionsfähige Lösung der vorliegenden Erfindung dar. Um den Schätzalgorithmus robuster zu machen und insbesondere einer Parameterdrift entgegenzuwirken, kann weiterhin Gleichung 25 durch die Gleichung ${ϑ}_{k} = {ϑ}_{k - 1} + {K}_{k} DZ \left({e}_{k}\right)$ ersetzt werden. DZ ist eine Totzone oder Unempfindlichkeitszone. Für die Totzone DZ gilt $DZ : = { \begin{matrix}{e}_{k} - d & f {u}^{¨} r & {e}_{k} > d \\ 0 & f {u}^{¨} r & - d < {e}_{k} < d \\ {e}_{k} + d & f {u}^{¨} r & {e}_{k} < - d\end{matrix}$ d bestimmt die Größe der Totzone DZ. Vorzugsweise korrespondiert der Zahlenwert für d im wesentlichen mit dem typischen Rauschen der Abweichung e. Ein geeigneter Zahlenwert für d kann beispielsweise durch Beobachtung des Systems ermittelt werden oder durch Versuche herausgefunden werden.

Zusammengefasst betrifft die vorliegende Erfindung somit folgenden Sachverhalt:

Eine Hydraulikzylindereinheit 1 weist einen Hydraulikzylinder 2, einen in dem Hydraulikzylinder 2 verfahrbaren Kolben 3 und ein Servoventil 7 auf. Der Kolben 3 trennt ein erstes und ein zweites Arbeitsvolumen 5A, 5B der Hydraulikzylindereinheit 1 voneinander. Das Servoventil 7 ist mit einer Hydraulikpumpe 8, einem Tank 9 sowie dem ersten und dem zweiten Arbeitsvolumen 5A, 5B verbunden. Das Servoventil 7 wird über die Hydraulikpumpe 8 mit einem Pumpendruck pP beaufschlagt. Der Tank 9 weist einen Tankdruck pT auf. Das Servoventil 7 wird auf eine definierte Ventilstellung y eingestellt. Eine Kolbenstellung z des Kolbens 3 im Hydraulikzylinder 2 sowie ein erster und ein zweiter Arbeitsdruck pA, pB, mit dem das erste und das zweite Arbeitsvolumen 5A, 5B beaufschlagt sind, werden erfasst. Eine Auswertungseinrichtung 12 ermittelt anhand der Kolbenstellung z, des ersten und des zweiten Arbeitsdrucks pA, pB, der Ventilstellung y, des Pumpendrucks pP und des Tankdrucks pT in Verbindung mit zeitlich unveränderlichen Parametern der Hydraulikzylindereinheit 1 einen Leckagebeiwert ω der Hydraulikzylindereinheit 1.

Die vorliegende Erfindung weist viele Vorteile auf. Insbesondere wird durch die erfindungsgemäße Vorgehensweise ermöglicht, den Leckagebeiwert ω basierend auf Messwerten, die beim laufenden Betrieb der Hydraulikzylindereinheit 1 sowieso anfallen, robust zu schätzen. Eine Abweichung des ermittelten Leckagebeiwerts ω von einem nominalen oder erwarteten Leckagebeiwert kann dann dazu genutzt werden, einen Alarm auszulösen oder das Bedienpersonal auf einen anstehenden Wechsel der Dichtung hinzuweisen. Weiterhin wird die Zuverlässigkeit und Verfügbarkeit der Hydraulikzylindereinheit 1 erhöht, da ein aufwändiger Tausch der internen Ringdichtung in ein reguläres Wartungsintervall eingeplant werden kann, ohne ein vorheriges Versagen der Dichtung befürchten zu müssen und ohne die Dichtung frühzeitig vor Ablauf ihrer Lebensdauer ersetzen zu müssen. Die erfindungsgemäße Lösung ist kosteneffizient und ohne nennenswerte Änderung der Hardware realisierbar. Aufwändige Spezialhardware (insbesondere Durchflussmesser) werden nicht benötigt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Hydraulikzylindereinheit
- 2: Hydraulikzylinder
- 3: Kolben
- 4A, 4B: Arbeitsflächen
- 5A, 5B: Arbeitsvolumina
- 6A, 6B: Hydraulikpfade
- 7: Servoventil
- 8: Hydraulikpumpe
- 9: Hydraulikreservoir/Tank
- 10: Hydraulikflüssigkeit
- 11: Steuereinrichtung
- 12: Auswertungseinrichtung
- 13: Computerprogramm
- 14: Datenträger
- 15: Maschinencode
- 16: Sensoren
- 17: weiterer Sensor
- AA, AB: Größe der wirksamen Arbeitsflächen
- DZ: Totzone
- E: Federkonstante der Hydraulikflüssigkeit
- e: Abweichung
- G: Filterfunktion
- g1, g2: Polynome
- H, HF: Regressorvektoren
- H1, H2, H1F, H2F: Komponenten der Regressorvektoren
- I: Leckstrom
- L: Laplace-Transformation
- K: Kalman-Verstärkung
- k: Index
- k0: maximale Kovarianz
- P: Kovarianzfaktor
- pA, pB: Arbeitsdrücke
- pN: Nenndruck
- pP: Pumpendruck
- pT: Tankdruck
- QNA, QNB: Nennvolumenströme
- R: Varianz des Messrauschens
- s: Frequenzparameter
- TS: Zeitkonstante
- VA, VB: Volumina
- VminA, VminB: Minimalvolumina
- x, xF: Streckenausgangswerte
- x1, x2, x1F, x2F: Komponenten der Streckenausgangswerte
- y: Ventilstellung
- z: Kolbenstellung
- zmax: Maximalstellung des Kolbens
- zmin: Minimalstellung des Kolbens

- λ: Lernrate
- λ0: maximale Lernrate
- θ: unbekannter Parameter
- ω: Leckagebeiwert

## Patentansprüche

1. Ermittlungsverfahren für einen Leckagebeiwert (ω) einer Hydraulikzylindereinheit (1), die einen Hydraulikzylinder (2), einen in dem Hydraulikzylinder (2) verfahrbaren Kolben (3) und ein Servoventil (7) aufweist, wobei der Kolben (3) ein erstes und ein zweites Arbeitsvolumen (5A, 5B) der Hydraulikzylindereinheit (1) voneinander trennt, wobei das Servoventil (7) mit einer Hydraulikpumpe (8), einem Tank (9) sowie dem ersten und dem zweiten Arbeitsvolumen (5A, 5B) verbunden ist,
- wobei das Servoventil (7) über die Hydraulikpumpe (8) mit einem Pumpendruck (pP) beaufschlagt wird und der Tank (9) einen Tankdruck (pT) aufweist,
- wobei das Servoventil (7) auf eine definierte Ventilstellung (y) eingestellt wird,
- wobei eine Kolbenstellung (z) des Kolbens (3) im Hydraulikzylinder (2) sowie ein erster und ein zweiter Arbeitsdruck (pA, pB), mit dem das erste und das zweite Arbeitsvolumen (5A, 5B) beaufschlagt sind, erfasst werden,
- wobei eine Auswertungseinrichtung (12) die Kolbenstellung (z), den ersten und den zweiten Arbeitsdruck (pA, pB) und die Ventilstellung (y) entgegennimmt,
- wobei die Auswertungseinrichtung (12) den Leckagebeiwert (ω) anhand der Kolbenstellung (z), des ersten und des zweiten Arbeitsdrucks (pA, pB), der Ventilstellung (y), des Pumpendrucks (pP) und vorzugsweise des Tankdrucks (pT) in Verbindung mit zeitlich unveränderlichen Parametern der Hydraulikzylindereinheit (1) ermittelt.

2. Ermittlungsverfahren nach Anspruch 1,
**dadurch gekennzeichnet,**
**dass** die Auswertungseinrichtung (12) den Leckagebeiwert (ω) rekursiv anhand einer Sequenz ermittelt, wobei die Sequenz Gruppen von zeitlich zusammengehörigen Werten der Kolbenstellung (z), des ersten und des zweiten Arbeitsdrucks (pA, pB), der Ventilstellung (y), des Pumpendrucks (pP) und vorzugsweise des Tankdrucks (pT) umfasst.

3. Verfahren nach einem der vorhergehenden Ansprüche,
**dadurch gekennzeichnet,**
**dass** eine Differenz zwischen einem nominalen Leckagebeiwert und dem ermittelten Leckagebeiwert (ω) während des Betriebs der Hydraulikzylindereinheit (1) ermittelt wird und falls der Absolutwert der Differenz einen Schrankenwert überschreitet, ein Alarm ausgelöst wird oder ein Wechsel der Hydraulikzylindereinheit (1) eingeleitet wird.

4. Computerprogramm für eine Auswertungseinrichtung (12), wobei das Computerprogramm Maschinencode (15) umfasst, der von der Auswertungseinrichtung (12) unmittelbar abarbeitbar ist, wobei die Abarbeitung des Maschinencodes (15) durch die Auswertungseinrichtung (12) bewirkt, dass die Auswertungseinrichtung (12)
- eine Kolbenstellung (z) eines in einem Hydraulikzylinder (2) einer Hydraulikzylindereinheit (1) verfahrbaren, ein mit einem Servoventil (7) der Hydraulikzylindereinheit (1) verbundenes erstes und ein mit dem Servoventil (7) verbundenes zweites Arbeitsvolumen (5A, 5B) der Hydraulikzylindereinheit (1) voneinander trennenden Kolbens (3) der Hydraulikzylindereinheit (1), einen ersten und einen zweiten Arbeitsdruck (pA, pB), mit dem das erste und das zweite Arbeitsvolumen (5A, 5B) beaufschlagt sind, und eine Ventilstellung (y) des Servoventils (7) entgegennimmt und
- anhand der Kolbenstellung (z), des ersten und des zweiten Arbeitsdrucks (pA, pB), der Ventilstellung (y), eines Pumpendrucks (pP) einer mit dem Servoventil (7) verbundenen Hydraulikpumpe (8) und vorzugsweise eines Tankdrucks (pT) eines mit dem Servoventil (7) verbundenen Tanks (9) in Verbindung mit zeitlich unveränderlichen Parametern der Hydraulikzylindereinheit (1) einen Leckagebeiwert (ω) der Hydraulikzylindereinheit (1) ermittelt.

5. Computerprogramm nach Anspruch 4,
**dadurch gekennzeichnet,**
**dass** die Abarbeitung des Maschinencodes (15) durch die Auswertungseinrichtung (12) bewirkt, dass die Auswertungseinrichtung (12) den Leckagebeiwert (ω) rekursiv anhand einer Sequenz ermittelt, wobei die Sequenz Gruppen von zeitlich zusammengehörigen Werten der Kolbenstellung (z), des ersten und des zweiten Arbeitsdrucks (pA, pB), der Ventilstellung (y), des Pumpendrucks (pP) und vorzugsweise des Tankdrucks (pT) umfasst.

6. Auswertungseinrichtung zum Ermitteln eines Leckagebeiwerts (ω) einer Hydraulikzylindereinheit (1), die einen Hydraulikzylinder (2), einen in dem Hydraulikzylinder (2) verfahrbaren Kolben (3) und ein Servoventil (7) aufweist, wobei der Kolben (3) ein erstes und ein zweites Arbeitsvolumen (5A, 5B) der Hydraulikzylindereinheit (1) voneinander trennt, wobei das Servoventil (7) mit einer Hydraulikpumpe (8), einem Tank (9) sowie dem ersten und dem zweiten Arbeitsvolumen (5A, 5B) verbunden ist,
**dadurch gekennzeichnet,**
**dass** die Auswertungseinrichtung (12) mit einem Computerprogramm (13) nach Anspruch 3 oder 4 programmiert ist.

7. Hydraulikzylindereinheit, die einen Hydraulikzylinder (2), einen in dem Hydraulikzylinder (2) verfahrbaren Kolben (3) und ein Servoventil (7) aufweist, wobei der Kolben (3) ein erstes und ein zweites Arbeitsvolumen (5A, 5B) der Hydraulikzylindereinheit voneinander trennt, wobei das Servoventil (7) mit einer Hydraulikpumpe (8), einem Tank (9) sowie dem ersten und dem zweiten Arbeitsvolumen (5A, 5B) verbunden ist,
- wobei das Servoventil (7) über die Hydraulikpumpe (8) mit einem Pumpendruck (pP) beaufschlagt wird und der Tank (9) einen Tankdruck (pT) aufweist,
- wobei das Servoventil (7) auf eine definierte Ventilstellung (y) eingestellt wird,
- wobei von entsprechenden Sensoren (16) eine Kolbenstellung (z) des Kolbens (3) im Hydraulikzylinder (2) sowie ein erster und ein zweiter Arbeitsdruck (pA, pB), mit dem das erste und das zweite Arbeitsvolumen (5A, 5B) beaufschlagt sind, erfasst werden,
- wobei eine Auswertungseinrichtung (12) von den Sensoren (16) die Kolbenstellung (z), den ersten und den zweiten Arbeitsdruck (pA, pB) und von der Steuereinrichtung (11) oder von einem weiteren Sensor (17) die Ventilstellung (y) entgegennimmt,
- wobei die Auswertungseinrichtung (12) den Leckagebeiwert (ω) anhand der Kolbenstellung (z), des ersten und des zweiten Arbeitsdrucks (pA, pB), der Ventilstellung (y), des Pumpendrucks (pP) und vorzugsweise des Tankdrucks (pT) in Verbindung mit zeitlich unveränderlichen Parametern der Hydraulikzylindereinheit (1) ermittelt.

8. Hydraulikzylindereinheit nach Anspruch 7,
**dadurch gekennzeichnet,**
**dass** die Auswertungseinrichtung (12) derart ausgebildet ist, dass sie den Leckagebeiwert (ω) rekursiv anhand einer Sequenz ermittelt, wobei die Sequenz Gruppen von zeitlich zusammengehörigen Werten der Kolbenstellung (z), des ersten und des zweiten Arbeitsdrucks (pA, pB), der Ventilstellung (y), des Pumpendrucks (pP) und vorzugsweise des Tankdrucks (pT) umfasst.
